# EUROPEAN PATENT SPECIFICATION

(11) **EP 1 029 896 B1**
(45) Date of publication and mention of the grant of the patent: **17.05.2006**
(21) Application number: 99103180.8
(22) Date of filing: 18.02.1999
(51) Int. Cl.: C08L 77/00, B32B 27/34, B32B 27/08, B65D 65/40

(54) **Multilayer, oriented, heat-shrinkable thermoplastic film**
Mehrlagiger, orientierter, hitzeschrumpfbarer thermoplastischer Film
Feuille thermoplastique, multicouche, orientée et thermorétractable

(43) Date of publication of application: 23.08.2000
(73) Proprietor: Cryovac, Inc., Duncan, S.C. 29334-0464 (US)
(72) Inventor: Paleari, Mario, 20010 Pogliano Milanese (Milan) (IT); Fornasiero, Tito, 20017 RHO (Milan) (IT)
(74) Representative: De Carli, Elda

(56) References cited:
- EP-A- 0 382 048
- EP-A- 0 405 933
- EP-A- 0 530 539
- EP-A- 0 530 549
- EP-A- 0 755 778
- WO-A-99/26783
- US-A- 5 106 910

## Description

The present invention relates to a multi-layer oriented, heat-shrinkable thermoplastic film particularly suitable for food packaging applications, that contains a polyamide blend.

Thermoplastic films have found many useful applications in the packaging industry particularly for food (meat, cheese, poultry, etc.) products.

In particular, when, in addition to an appealing package appearance, a long shelf life is desired for a food product, an oriented heat-shrinkable, gas-barrier, thermoplastic film is typically employed to package the product.

In general terms, the packaging of food items by means of a heat-shrinkable, gas-barrier, thermoplastic film comprises configuring the heat-shrinkable packaging material, either partially or completely, around a product (e.g. by placing the food item within a bag or pouch fabricated from the film), removing excess air from inside the package (e.g. vacuumizing the bag or pouch), sealing it and thereafter exposing the package to a heat source thereby causing the heat-shrinkable film to shrink and conform with the contours of the packaged food.

These films provide to the packaged foods an attractive appearance and in the mean time protect the packaged product from the environment and prolong its shelf life.

These films therefore need to have good gas barrier properties and mainly good sealing properties, in order to guarantee that the atmosphere within the package will not be affected by the atmosphere outside the package; they also need to have good mechanical properties to guarantee that the package will survive the handling involved in the product distribution chain; and finally they also need to have good optical properties and good shrink properties to provide the end package with the attractive appearance.

Packaging films with a more-or-less satisfactory balance of the above properties are known in the literature and spread in the market.

A problem that is however often found with the available films is that in the packaging process it is generally necessary to carefully position the packages to be vacuumized and sealed, one close to the other, in the vacuum chamber, so as to avoid any overlapping of the packages. In fact when overlapped or partially overlapped packages are heat-sealed, either it is not possible to get a seal of sufficient seal strength between the innermost heat-sealing layers of each overlapped package or, if the temperature and pressure of the sealing bars are high enough to guarantee sealing through the overlapped webs, sealing of the overlapped outermost layers is also obtained, what leads to a high number of rejects. This also means that in the packaging process the speed of the overall process is limited by the number of packages that, at each sealing cycle, can be positioned, without overlapping, in the vacuum and sealing chamber.

Using bags that can suitably be heat-sealed also when overlapping occurs, without problems of insufficient seal strength and/or sealing or sticking of the outer abuse layers, a higher number of packages could be sealed in each sealing cycle with an increase in the packaging speed. Also, the positioning of the packages in the vacuum and sealing chamber, one along the other with no overlapping, would not be a must thus rendering the presence of an operator dedicated to said positioning, not necessary.

### SUMMARY OF THE INVENTION

As a first object, the present invention is directed to a new multilayer, oriented, heat-shrinkable thermoplastic film comprising a first outer abuse layer comprising a polyamide blend comprising
a) a polyamide characterized by a Tm > 200 °C, and
b) an aliphatic copolyamide, characterized by a Tg < 100 °C, comprising
   - ε-caprolactam,
   - 11-aminoundecanoic acid and/or 12-aminododecanoic acid, and
   - at least a third polyamide-forming aliphatic component,
   as the basic units,
and a second outer heat-sealing layer comprising a heat-sealable polyolefin. It has been found infact that the use of this polyamide blend in the manufacture of a heat-shrinkable film improves the orientability of the structure, both in terms of ease of orientability and width of the orientation window, giving a stable orientation process and improving the shrink properties of the end film.

It has also been found that the presence of this polyamide blend in the outer abuse layer of a multi-layer film that also comprises a suitable heat-sealing layer as the other outer layer, gives a film that can be converted to flexible containers, such as bags, a plurality of which can be stacked and sealed simultaneously.

As a second object the present invention is directed to a flexible container made of an oriented, heat-shrinkable thermoplastic film of the first object , said container having at least a sealed area formed by the film second outer heat-sealing layer.

As a third object the present invention is directed to a product packaged with an oriented, heat-shrinkable thermoplastic film of the first object , wherein the film second outer heat-sealing layer is the layer in contact with the product packaged.

### DEFINITIONS

In this specification and the accompanying claims:
the term "film" refers to a flat or tubular flexible structure of thermoplastic material having a thickness up to about 150 µm;
the term "heat-shrinkable" refers to a film that shrinks by at least 10 % of its original dimensions, in at least one of the longitudinal and transverse directions, when heated to 90°C for 4 seconds. The quantitative determination is carried out according to ASTM D 2732, as set forth in the 1990 Annual Book of ASTM Standards. Vol. 08.02. pp. 368-371;
the phrase "longitudinal direction" or " machine direction", herein abbreviated "MD", refers to a direction "along the length" of the film, i.e., in the direction of the film as the film is formed during extrusion and/or coating;
the phrase "transverse direction", herein abbreviated "TD", refers to a direction across the film, perpendicular to the machine direction;
the phrase "outer layer" refers to any film layer having only one of its principal surfaces directly adhered to another layer of the film;
the phrases "sealing-layer", "heat-sealable layer" and "heat sealing layer", refer to the outer film layer involved in the sealing of the film to itself;
the phrase "abuse layer" and "abuse-resistant layer" refer to the outside layer of the film which is not the sealant layer and which is subject to abuse;
the phrases "inner layer", "intermediate layer", and "internal layer" refer to any film layer having both of its principal surfaces directly adhered to another layer of the film;
the phrase "tie layer" refers to any internal layer having the primary purpose of adhering two layers to one another;
the term "core", and the phrase "core layer" refer to any internal layer which preferably has a function other than serving as a tie or compatibilizer for adhering two layers to one another;
as used herein, the term "barrier", and the phrase "barrier layer", as applied to films and/or layers, is used with reference to the ability of a film or layer to serve as a barrier to gas. In the packaging art, gas (e.g., gaseous O₂) barrier layers have, in general, included, for example, ethylene-vinyl alcohol copolymer (EVOH), polyvinylidene chloride (PVDC), polyalkylene carbonate, polyamide, polyethylene naphthalate, polyester, polyacrylonitrile, etc., as known to those of skill in the art. However, in the present invention the gas-barrier layer preferably comprises either EVOH or polyvinylidene chloride, the PVDC comprising a thermal stabilizer (i.e., HCl scavenger, e.g., epoxidized soybean oil) and a lubricating processing aid, which, for example, comprises one or more acrylates;
the phrase "directly adhered", as applied to film layers, is defined as adhesion of the subject film layer to the object film layer, without a tie layer, adhesive, or other layer there-between. In contrast, as used herein, the word "between", as applied to a film layer expressed as being between two other specific layers, includes both direct adherence of the subject layer between to the two other layers it is between, as well as a lack of direct adherence to either or both of the two other layers the subject layer is between, i.e., one or more additional layers can be imposed between the subject layer and one or more of the layers the subject layer is between.

As used herein, the term "homopolymer" is used with reference to a polymer resulting from the polymerization of a single monomer, i.e., a polymer consisting essentially of a single type of repeating unit.

As used herein, the term "copolymer" refers to polymers formed by the polymerization reaction of at least two different monomers.

As used herein, the term "polymer" refers to both homo-polymers and co-polymers as defined above.

As used herein the term "polyolefin" is used with reference to any thermoplastic polymer of simple olefins such as ethylene, propylene, and butene, and co-polymer comprising a major proportion of a simple olefin and a minor proportion of one or more comonomers copolymerisable therewith such as typically another olefin vinyl acetate, alkyl (meth)acrylate, (meth)acrylic acid, maleic anhydride, and the like, as well as modifications thereof. The term "polyolefin" specifically includes polyethylene, ethylene co-and ter-polymers, polybutene, propylene-butene co- polymer, and the like.

As used herein the terms "polyethylene" and "ethylene homopolymer" identify polymers consisting essentially of an ethylene repeating unit. Depending on the polymerization process employed, polymers with a different degree of branching and a different density can be obtained. Those characterized by a low degree of branching and showing a density higher than 0.940 g/cm³ are called HDPE while those with a higher level of branching and a density up to 0.940 g/cm³ are called LDPE.

As used herein the term "ethylene copolymer" refers to the copolymers of ethylene with one or more other olefins and/or with a non-olefinic comonomer copolymerizable with ethylene, such as vinyl monomers, modified polymers thereof, and the like. Specific examples include ethylene-α-olefin copolymers, ethylene-vinyl acetate copolymers, ethylene-ethyl acrylate copolymers, ethylene-butyl acrylate copolymers, ethylene-methyl acrylate copolymers, ethylene-acrylic acid copolymers, ethylene-methacrylic acid copolymers, ionomer resins, ethylene-alkyl acrylate-maleic anhydride ter-polymers, etc..

As used herein, the phrase "heterogeneous polymer" refers to polymerization reaction products of relatively wide variation in molecular weight and relatively wide variation in composition distribution, i.e., polymers made, for example, using conventional Ziegler-Natta catalysts. Such polymers typically contain a relatively wide variety of chain lengths and comonomer percentages.

As used herein, the phrase "homogeneous polymer" refers to polymerization reaction products of relatively narrow molecular weight distribution and relatively narrow composition distribution. Homogeneous polymers exhibit a relatively even sequencing of comonomers within a chain, the mirroring of sequence distribution in all chains, and the similarity of length of all chains, and are typically prepared using metallocene, or other single-site type catalysis.

More particularly, homogeneous ethylene-α-olefin copolymers may be characterized by one or more methods known to those of skill in the art, such as molecular weight distribution (Mw/Mn), composition distribution breadth index (CDBI), and narrow melting point range and single melt point behavior.

A homogeneous ethylene-α-olefin copolymer can, in general, be prepared by the copolymerization of ethylene and any one or more α-olefin. Preferably, the α-olefin is a C₃-C₂₀-α-mono-olefin, more preferably, a C₄-C₁₂-α-mono-olefin, still more preferably, a C₄-C₈-α-mono-olefin. Still more preferably, the α-olefin comprises at least one member selected from the group consisting of butene-1, hexene-1, and octene-1. Most preferably, the α-olefin comprises octene-1, and/or a blend of hexene-1 and butene-1.

Processes for preparing homogeneous polymers are disclosed in US Patent No. 5,206,075, US Patent No. 5,241,031, and PCT International Application WO 93/03093. Further details regarding the production and use of one genus of homogeneous ethylene-α-olefin copolymers are disclosed in US Patent No. 5,206,075, to Hodgson. Jr.; US Patent No. 5,241,031, to Mehta; PCT International Publication Number WO 93/03093, in the name of Exxon Chemical Company; and PCT International Publication Number WO 90/03414, in the name of Exxon Chemical Patents, Inc.. Still another genus of homogeneous ethylene-α-olefin copolymers is disclosed in US Patent No. 5,272,236, to Lai, et.al., and US Patent No. 5,278,272, to Lai, et.al..

As used herein, the phrase "ethylene-α-olefin copolymers" refer to such heterogeneous materials as linear low density polyethylene (LLDPE), linear medium density polyethylene (LMDPE) and very low and ultra low density polyethylene (VLDPE and ULDPE); and homogeneous polymers such as metallocene catalyzed polymers such as EXACT™ materials supplied by Exxon, AFFINITY™ and ENGAGE™ materials supplied by Dow, LUFLEXEN™ materials supplied by BASF and TAFMER™ materials supplied by Mitsui Petrochemical Corporation. These materials generally include copolymers of ethylene with one or more comonomers selected from C, to C₁₀ α-olefins such as butene-1, hexene-1, octene-1, etc..

As used herein the term "modified polyolefin" is inclusive of modified polymer prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like; as well as of modified polymer obtained by incorporating, into the olefin homopolymer or copolymer, an unsaturated carboxylic acid, e.g. maleic acid, fumaric acid, or the like, or a derivative thereof such as the anhydride, ester or metal salt or the like. Examples of said modified polyolefins are graft copolymers of maleic acid or anhydride onto ethylene-α-olefin copolymers, graft copolymers of fused ring carboxylic anhydrides onto polyethylene, resin mixtures of these and mixtures with polyethylene or ethylene-α-olefin copolymers.

As used herein the term "ethylene-acrylic acid and ethylene-methacryilic acid copolymers" refers to copolymers of ethylene with a copolymerisable ethylenically unsaturated carboxylic acidic monomer selected from acrylic acid and methacrylic acid. The copolymer typically contains from about 4 to about 18% by weight of acrylic or methacrylic acid units. Said copolymer can also contain, copolymerised therein an alkyl (meth)acrylate, such as n-butyl acrylate or methacrylate or isobutyl acrylate or methacrylate. Said copolymer can be in the free acid form as well as in the ionized or partially ionized form wherein the neutralizing cation can be any suitable metal ion, e.g. an alkali metal ion, a zinc ion or other multivalent metal ions; in this latter case the copolymer is also termed "ionomer".

As used herein the term "ethylene-vinyl acetate copolymer" or "EVA" is intended to refer to a copolymer formed from ethylene and vinyl acetate monomers wherein the ethylene derived units in the copolymer are present in major amounts; preferably between about 60% and 98% by weight and the vinyl acetate derived units in the copolymer are present in minor amounts, preferably between about 2% and about 40% by weight.

As used herein the term "ethylene-alkyl (meth)acrylate copolymers" refers to copolymers of ethylene with alkyl (meth)acrylates, e.g. methyl (meth)acrylate, butyl (meth)acrylate, and iso-butyl (meth)acrylate wherein the ethylene derived units in the copolymer are present in major amounts and the alkyl (meth)acrylate derived units in the copolymer are present in minor amounts, preferably between about 2% and about 28% by weight.

As used herein, the term EVOH refers to saponified products of ethylene-vinyl ester copolymers, generally of ethylene-vinyl acetate copolymers, wherein the ethylene content is typically comprised between 20 and 60% by mole, preferably comprised between 28 and 48% by mole and more preferably between 32 and 44% by mole and the degree of saponification is generally higher than 80% preferably higher than 90%, more preferably higher than 95%.

As used herein, the term "polyamide" is intended to refer to both polyamides and co-polyamides. This term specifically includes those aliphatic polyamides obtained by polymerization of a suitable aminoacid or lactam, such as typically polyamide 6 which is a homopolymer based on ε- caprolactam, or obtained through polycondensation of a diamine with a diacid, such as polyamide 66 which is a homopolycondensate based on hexamethylene diamine and adipic acid, or copolyamides obtained by copolymerisation of precursor monomers of at least two different polyamides, such as at least two lactams or at least one lactam on one side and at least a diamine and a diacid on the other side, or at least two types of diamines and at least one diacid, or vice-versa at least two types of diacids and at least one diamine, such as polyamide 6/12 (polyamide copolymer based on ε-caprolactam and laurolactam), polyamide 6/66 (polyamide copolymer based on ε-caprolactam, hexamethylenediamine and adipic acid), modifications thereof and blends thereof. Said term also includes crystalline or partially crystalline, aromatic or partially aromatic, polyamides.

The terms "Tm" or "m.p." or "melting point" identify the melting temperature of the resin concerned, while the term "Tg" identifies the glass transition temperature of the resin concerned.

Both Tm and Tg are evaluated by DSC, by ASTM D 3418-97.

These are reported as second heating data, i.e., the sample is heated at a programmed rate of 10°C/min from 0 °C to a temperature below its critical range, cooled down and then reheated (2^{nd} heating) still at a programmed rate of 10°C/min.

### DETAILED DESCRIPTION OF THE INVENTION

A first object of the present invention is a multilayer, oriented heat-shrinkable, thermoplastic film comprising a first outer abuse layer comprising polyamide blend comprising
a) a polyamide characterized by a Tm > 200 °C, and
b) an aliphatic co-polyamide, characterized by a Tg < 100 °C, comprising
   - ε-caprolactam,
   - 11-aminoundecanoic acid and/or 12-aminododecanoic acid, and
   - at least a third polyamide-forming aliphatic component,
   as the basic units, and a second outer heat-sealing layer comprising a heat-realable polyolefin.

Preferred polyamides a) will have a melting point higher than 210 °C, more preferred polyamides a) will have a melting temperature higher than 215 °C and yet even more preferred polyamides a) will have a melting temperature higher than 220 °C.

Examples of suitable polyamides a) include polyamide 6, modified polyamide 6 (such as a polyamide 6 copolymer comprising less than 5%, preferably less than 4%, and even more preferably less than 3 % of an aromatic co-monomer such as terephthalic acid), polyamide 66, polyamide 46, polyamide 6/66, and some polyamide 6/12 copolymers.

Preferably the polyamide a) will comprise polyamide 6, a modified polyamide 6, a copolyamide of polyamide 6 and a partially aromatic polyamide, a polyamide 66, or a polyamide 6/66.

Polyamide component b) may comprise up to about 99 wt. % of ε-caprolactam, from about 0.5 wt. % to about 40 wt. % of 11-aminoundecanoic acid and/or 12-aminododecanoic acid, and from about 0.5 wt. % to about 40 wt. % of said at least third polyamide-forming aliphatic component.

Said third polyamide-forming aliphatic component is typically a lactam, such as preferably laurolactam, or the equimolar salt of a diamine with a diacid, such as preferably the equimolar salt of hexamethylenediamine with adipic acid or the equimolar salt of hexamethylenediamine with 1,12-dodecandioic acid.

Suitable co-polyamides b) are for instance those described in US-A-5,739,262 assigned to Bayer AG, that comprise from 75 to 85 wt. % of ε-caprolactam, from 4 to 20 wt. % of 11-aminoundecanoic acid and/or 12-aminododecanoic acid and from 4 to 20 wt. % of the equimolar salt of hexamethylenediamine with adipic acid.

Other co-polyamides b) are those described in Japanese patent application publication no. 9234789 (WPI AN 97-497947) that comprise from 85 to 99 wt. % ε-caprolactam, from 0.5 to 5 wt. % of 12-aminododecanoic acid and from 0.5 to 10 wt. % of the equimolar salt of hexamethylenediamine with adipic acid; those described in US-A-3,883,487 that comprise from 20 to 40 wt. % of ε-caprolactam, from 15 to 35 wt. % of 11-aminoundecanoic acid, from 15 to 40 wt. % of the equimolar salt of hexamethylenediamine with adipic acid, and from 20 to 35 wt. % of laurolactam; and those described in DE-A-1,595,591 that comprises 10 to 70 wt. % of ε-caprolactam and preferably equimolar amount of 11-aminoundecanoic acid and laurolactam.

In a preferred embodiment however the co-polyamide b) comprises at least 50 wt. %, preferably at least 60 wt. % and even more preferably at least 70 wt. % of ε-caprolactam basic unit.

In a preferred embodiment the co-polyamide b) has a Tg < 90 °C and in a more preferred embodiment a Tg < 80 °C.

The polyamide a) is present in the blend in an amount of preferably 30 to 95 wt. %, based on the weight of the polyamide blend; more preferably in an amount of 40 to 92 wt. %; even more preferably in an amount of 50 to 90 wt. %; and yet still more preferably in an amount of 60 to 87 wt. %. A very useful blend comprises between 65 and 85 wt. % of polyamide a).

The polyamide blend enyloyed for the first outer abuse layer of the film of the present invention may be used as such or it can be blended with a minor proportion of one or more other thermoplastic resins.

In a more preferred embodiment of the present invention the polyamide blend is admixed with a minor proportion of an ethylene-vinyl alcohol copolymer.

In particular, amounts of EVOH up to 35 wt.%, preferably up to 30 wt.%, and even more preferably up to 25 wt.%, based on the overall weight of the polyamide blend, may suitably be employed. Typically in said preferred aspect the polyamide blend is admixed with from about 3 to about 25 wt. %, preferably from about 5 to about 20 wt. %, and more preferably from about 8 to about 15 wt. %, of EVOH.

It has been found in fact that the addition of even a minor proportion of EVOH to the polyamide blend, increases the stability of the orientation process and improves the film shrink and stack sealing properties. The film of the present invention may be made by well known conventional processes.

Oriented heat-shrinkable films may be manufactured through extrusion, co-extrusion, or extrusion coating, through a round or a flat extrusion die, followed by a quick quenching of the thick tube or sheet thus obtained, re-heating to the suitable orientation temperature which is lower than the m.p. of at least one of the resins employed in the film and higher than the Tg of all the resins employed ("solid state orientation"), and finally mono- or bi-axial stretching by the trapped bubble method or by the tenter frame technology. Finally, when heat-set films are desired, heating of the oriented heat-shrinkable films while they are restrained from shrinking, brings in a relaxation of the oriented polymer molecules and give a film with the desired heat-stability.

In the multi-layer film of the present invention, the second outer heat-sealing layer may comprise a single polymer or a blend of two or more polymers as known in the art. Preferably the melting point of the polyolefin resin(s) of the heat-sealing layer is < 140 °C, and preferably < 130°C. In a more preferred embodiment it is comprised between about 80°C and about 128 °C.

Such a heat-sealable polyolefin layer may for example comprise heterogeneous or homogeneous ethylene- (C₄-C₈)-α-olefin copolymers having a density < 0.915 g/cm³; blends thereof with minor amount of polyethylene homopolymers; ethylene-vinyl acetate copolymers; ethylene-acrylic or methacrylic acid copolymers including ionomers; blends of heterogeneous or homogeneous ethylene-(C₄-C₈)-α-olefin copolymers having a density from about 0.915 g/cm³ to about 0.930 g/cm³ with ethylene-vinyl acetate copolymers or ethylene-alkyl (meth)acrylate copolymers; ethylene-propylene-butene ter-polymers; ethylene-alkyl acrylate-maleic anhydride ter-polymers; and the like polymers.

In a preferred embodiment said second outer heat-sealing layer will comprise a heterogeneous or homogeneous ethylene-(C₄-C₈)-α-olefin copolymer having a density ≤ 0.915 g/cm³, and even more preferably a heterogeneous or homogeneous ethylene-(C₄-C₈)-α-olefin copolymer having a density comprised between about 0.895 g/cm³ and about 0.912 g/cm³. The Melt Index of said heterogeneous or homogeneous ethylene-(C₄-C₈)-α-olefin copolymer may range from about 0.1 to about 15 g/10 min (measured by ASTM D-1238, Condition E). However, preferred values are in the range 0.5-10 g/10 min and still more preferred values are in the range 1.0-7.0 g/10 min.

In a preferred embodiment, the multi-layer film will also comprise an intermediate gas-barrier layer. In particular when high gas-barrier properties are required, the film will comprise an intermediate gas-barrier layer, typically comprising PVDC or EVOH.

In one preferred embodiment said layer will comprise EVOH that may be used alone or optionally blended with the resins and/or additives known in the field, such as conventional plasticisers, e.g. crystalline or amorphous polyamides.

In another preferred embodiment said gas-barrier layer will comprise PVDC.

Additional layers, such as for instance shrink layers , or bulk layers, can be present as intermediate layers.

Suitable resins for said additional intermediate layer include for instance ethylene copolymers, particularly ethylene-vinyl acetate copolymers, ethylene-alkyl acrylate copolymers, ethylene-α-olefin copolymers with a very low density, and the like resins.

To improve the adhesion between the different layers, tie layers can be present in the multi-layer film according to the invention. Tie layers typically comprise a modified polyolefin or preferably a blend of a modified polyolefin with a polyolefin, such as for instance a blend of an acid or anhydride modified EVA with EVA or LLDPE.

The resins used in the manufacture of the films according to the present invention, in the heat-sealing layer, in the outer abuse layer or in any of the intermediate layers, can be suitably additivated as known in the art in order to improve the properties of the film or the manufacturing process thereof.

As an example the resins may contain stabilizers, anti oxidants, pigments, UV absorbers, cross-linking enhancers or cross-linking inhibitors, anti-fog agents, slip and anti-blocking agents, etc., as conventionally used in this field.

In one embodiment of the present invention the film has four layers wherein a tie layer is directly adhered to the heat-sealing layer and to one of the surfaces of an intermediate gas-barrier layer, comprising EVOH, the other surface of said intermediate gas-barrier layer being directly adhered to the outer abuse layer comprising the new polyamide blend.

In another embodiment the film has five layers wherein a tie layer is directly adhered to the heat-sealing layer and to one of the surfaces of an intermediate gas-barrier layer, the other surface of said intermediate gas-barrier layer being directly adhered to one of the surfaces of a second tie layer, the other surface of which is directly adhered to the outer abuse layer comprising the new polyamide blend.

In still another embodiment of the present invention the film has six layers wherein the sequence of layers directly adhered one to the other is heat-sealing outer layer/tie layer/ bulk or shrink intermediate layer/gas-barrier layer/tie layer/outer abuse layer, wherein the outer abuse layer comprises the new polyamide blend. In said embodiment the two tie layers may be equal or different.

In other embodiments of the present invention the film may have seven or more layers depending on the manufacturing equipment available and the mechanical and gas-barrier properties desired for the end film. More than one bulk or shrink layers as well as more than one gas barrier layers may in fact be present in the end film and various combinations of layers can be used in the formation of a multi-layer film according to the present invention.

Generally, for use in food packaging, a suitable thickness of the film of the present invention is in the range of from about 10 to about 120 µm, preferably from about 15 to about 70 µm, and more preferably of from about 35 to about 60 µm.

Typically the first outer abuse layer has a thickness comprised between about 3 and about 25 µm, preferably comprised between about 4 about 20 µm, more preferably between about 5 and about 15 µm.

The second outer heat-sealing layer has a thickness that may range from a minimum of 4-5 µm, up to about 60 % of the total film thickness, preferably up to about 50 %. Preferably the thickness of the second outer heat-sealing layer is comprised between about 20 and about 40 % of the total film thickness.

The thickness of an optional intermediate barrier layer is generally comprised between about 2 and about 15 µm, preferably between about 3 and about 10 µm, and more preferably between about 4 and about 8 µm, while the thickness of possible intermediate tie layers is typically of a few µm, e.g. 2-5 µm, due to their high cost.

The films of the present invention are mono- or, preferably, bi-axially oriented and heat-shrinkable.

Preferably the heat-shrinkable multi-layer film of the present invention shrinks by at least 20 % of its original dimensions, in at least one of the longitudinal and transverse directions, when heated to 90°C for 4 seconds, and more preferably by at least 30 % of its original dimensions, in at least one of the longitudinal and transverse directions, when heated to 90°C for 4 seconds. In a most preferred embodiment the heat-shrinkable multi-layer film of the present invention shrinks by at least 20 % of its original dimensions, in both directions, when heated to 90°C for 4 seconds.

Mono- or, preferably, bi-axially oriented and heat-shrinkable films are generally manufactured by the so-called trapped-bubble process, which is a widely known process typically used for the manufacture of the heat-shrinkable films for food contact packaging.

According to said process, the multilayer film is co-extruded through a round die to obtain a tube of molten polymer which is quenched immediately after extrusion without being expanded, optionally cross-linked, then heated to a temperature which is above the Tg of all the resins employed and below the melting temperature of at least one of the resins employed, typically by passing it through a hot water bath, and expanded, still at this temperature by internal air pressure to get the transversal orientation and by a differential speed of the pinch rolls which hold the thus obtained "trapped bubble" to provide the longitudinal orientation. The film is then rapidly cooled to somehow freeze the molecules of the film in their oriented state and wound.

While in a preferred embodiment of the present invention the film is bi-axially oriented and will therefore be heat-shrinkable in both directions, mono-oriented films or preferentially oriented films can be obtained by avoiding or controlling transversal or longitudinal orientation.

Depending on the number of layers in the structure it may be advisable or necessary to split the co-extrusion step : in such a case a tube is first formed of a limited number of layers, generally with the second outer, heat-sealing layer on the inside of the tube; this tube is quenched quickly and before submitting it to the orientation step it is extrusion-coated with the remaining layers, again quenched quickly, optionally cross-linked, and then passed to the orientation. During the extrusion-coating step the tube is slightly inflated just to keep it in the form of a tube and avoid that it collapses.

The coating step can be simultaneous, by co-extruding all the remaining layers altogether, so as to simultaneously adhere all of them, one over the other, to the quenched tube obtained in the first extrusion step, or this coating step can be repeated as many times as the layers which are to be added.

In a preferred embodiment the film of the present invention is however co- extruded.

To produce cross-linking, an extrudate is treated with a suitable radiation dosage of high energy electrons, preferably using an electron accelerator, with the dosage level being determined by standard dosimetry methods.

A suitable radiation dosage of high-energy electrons is in the range of up to about 120 kGy, more preferably about 16-100 kGy, and still more preferably about 34-84 kGy.

Other accelerators such as a Van der Graff generator or resonating transformer may be used. The radiation is not limited to electrons from an accelerator since any ionizing radiation may be used.

Irradiation is most preferably performed prior to orientation but it could also be performed after orientation.

Alternatively the mono- or bi-axially oriented heat-shrinkable film may also be prepared by flat extrusion (co-extrusion or extrusion coating) followed by orientation in one or both directions via tenter-frame. Orientation may be carried out in such a case either sequentially or simultaneously.

In some instances it may be desirable to submit the oriented structure to an annealing step; this typically consists in a controlled heating-cooling treatment that is carried out on the oriented film in order to have better control on low temperature dimensional stability of the shrinkable tubing or sheet.

The film of the present invention may be used either as a film, or a bag or pouch, or as a tubular casing to form a package in a conventional manner.

In a preferred embodiment the film is obtained as a tubular film and, if desired, individual bags are formed by transverse sealing and cutting across the flattened tubular film. Alternatively bags can be made by slitting the tubular film along one edge and then transversely sealing and severing the film to produce bags. Other methods of making bags and packages are known and may be readily adapted to use with the films of the invention.

An additional object of the present invention is a flexible container made of a multi-layer oriented heat-shrinkable thermoplastic film comprising at least a first outer abuse layer comprising a blend comprising
a) a polyamide characterized by a Tm > 200 °C, and
b) an aliphatic co-polyamide, characterized by a Tg < 100 °C, comprising
   - ε-caprolactam,
   - 11-aminoundecanoic acid and/or 12-aminododecanoic acid, and
   - at least a third polyamide-forming aliphatic component,
   as the basic units,
and a second outer heat-sealing layer comprising a heat-sealable polyolefin,
said container having at least a sealed area formed by said second outer heat-sealing layer.

In a preferred embodiment of the present invention the multi-layer film for making the flexible container also comprises a gas-barrier intermediate layer.

A further additional object of the present invention is a product packaged with a multi-layer oriented, heat-shrinkable, thermoplastic film comprising at least a first outer abuse layer comprising a blend comprising
a) a polyamide characterized by a Tm > 200 °C, and
b) an aliphatic co-polyamide, characterized by a Tg < 100 °C, comprising
   - ε-caprolactam,
   - 11-aminoundecanoic acid and/or 12-aminododecanoic acid, and
   - at least a third polyamide-forming aliphatic component,
   as the basic units,
and a second outer heat-sealing layer comprising a heat-sealable polyolefin, wherein said second outer heat-sealing layer is the layer in contact with the product packaged.

The present invention will now be described in more detail with particular reference to the following Examples:

### Example 1

A five layer film has been prepared by coextrusion through a round die, irradiation of the thus obtained thick tubing (primary tape) at a dosage level of 64 kGy and orientation at 95-98°C (about 3X in the longitudinal direction, and about 2.5X in the transverse direction) by the trapped-bubble process.

The sequence of layers (from the second outer heat-sealing layer to the first outer abuse layer is as follows:
A/B/C/D/E
wherein the resins used for the different layers and, between parentheses, the thickness of each layer are reported below:
A) homogeneous ethylene-octene-1 copolymer - d = 0.900 g/cm³ - MI = 6 g/10 min (measured by ASTM D1238 - Condition E (190 °C, 2.16 kg) - Affinity® PL 1280 by Dow (25 µm)
B) modified VLDPE - d = 0.906 g/cm³ - MI = 1.5 g/10 min (measured by ASTM D1238 - Condition E (190 °C, 2.16 kg) - Admer® AT 1094E by Mitsui (5 µm)
C) EVOH (44 mol % ethylene) - EVAL EP-105A by Marubeni (5 µm)
D) modified VLDPE - d = 0.906 g/cm³ - MI = 1.5 g/10 min (measured by ASTM D1238 - Condition E (190 °C, 2.16 kg) - Admer® AT 1094E by Mitsui (4 µm)
E) blend of 70 wt. % of polyamide 6 (Sniamid® AES 34F by Caffaro) and 30 % of a ter-polyamide comprising ε-caprolactam, 11-aminoundecanoic acid, and the equimolar salt of hexamethylenediamine and adipic acid as the basic units (Durethan® VP KU 2-2153 by Bayer - Tg ≅ 44 °C) (6 µm)

### Example 2

A five-layer film, having the same structure as that described in Example 1 has been prepared by the same method there described but avoiding the irradiation step.

### Example 3

A five layer film has been prepared by co-extrusion through a round die, irradiation of the thus obtained thick tubing (primary tape) at a dosage level of 64 kGy and orientation at 95-98°C (about 3X in the longitudinal direction, and about 2.5X in the transverse direction) by the trapped-bubble process.

The sequence of layers (from the second outer heat-sealing layer to the first outer abuse layer is as follows:
A/B/C/D/E
wherein the resins used for the different layers and, between parentheses, the thickness of each layer are reported below:
A) homogeneous ethylene-octene-1 copolymer - d = 0.900 g/cm³ - MI = 6 g/10 min (measured by ASTM D1238 - Condition E (190 °C, 2.16 kg) - Affinity® PL 1280 by Dow (25 µm)
B) modified VLDPE - d = 0.906 g/cm³ - MI = 1.5 g/10 min (measured by ASTM D1238 - Condition E (190 °C, 2.16 kg) - Admer® AT 1094E by Mitsui (4 µm)
C) EVOH (44 mol % ethylene) - EVAL EP-105A by Marubeni (4 µm)
D) anhydride grafted and rubber modified LLDPE - Tymor™ 1203 by Morton (4 µm)
E) blend of 70 wt. % of polyamide 6 (Capron B 100 WP by Allied Signal), 15 % of a ter-polyamide comprising ε-caprolactam, 11-aminoundecanoic acid, and the equimolar salt of hexamethylenediamine and adipic acid as the basic units (Durethan® VP KU 2-2153 by Bayer), and 15 % of EVOH (44 mol % ethylene)-EVAL EP-105A by Marubeni (9 µm)

### Example 4

A five-layer film has been prepared essentially as described in Example 3 but avoiding the irradiation step.

### Example 5

A five layer film is prepared substantially as described in Example 3 but using for the heat sealing layer a heterogeneous ethylene-octene-1 copolymer with d = 0.91 1 g/- cm³ and MI = 7 g/10 min (Stamylex 08-076F by DSM).

### Example 6

A five layer film is prepared essentially as described in Example 1 but replacing the resin used for the tie layer D) with a maleic anhydride grafted LLDPE (Admer® NF530E by Mitsui).

### Example 7

A five layer film is prepared essentially as described in Example 3 but using for the outer abuse layer a blend of 70 wt. % of polyamide 6 (Capron B100 WP by Allied Signal), 20 % of a ter-polyamide comprising ε-caprolactam, 11-aminoundecanoic acid, and the equimolar salt of hexamethylenediamine and adipic acid as the basic units (Durethan® VP KU 2-2153 by Bayer), and 10 % of EVOH (44 mol % ethylene) - EVAL EP-105A by Marubeni (9 µm).

### Example 8

A five layer film is prepared essentially as described in Example 3 but using for the outer abuse layer a blend of 70 wt. % of polyamide 6 (Capron B100 WP by Allied Signal), 10 % of a ter-polyamide comprising ε-caprolactam, 11-aminoundecanoic acid, and the equimolar salt of hexamethylenediamine and adipic acid as the basic units (Durethan® VP KU 2-2153 by Bayer), and 20 % of EVOH (44 mol % ethylene) - EVAL EP-105A by Marubeni (9 µm)

### Example 9

A five layer film is prepared essentially as described in Example 2 but replacing the resin used for the gas barrier layer (EVOH) with a blend of 30 % by weight of vinylidene chloride-methyl acrylate copolymer, 68 % by weight of vinylidene chloride-vinyl chloride and 2 % by weight of epoxidised soybean oil (PVDC).

### Example 10

A seven-layer film is prepared by extrusion coating through a round die.

A substrate formed of the following layers A/B/C/D wherein the heat-sealing layer A is the innermost layer of the tube, is co-extruded, quickly quenched with a water cascade, irradiated at a dosage level of 64 kGy and coated with the sequence of three layers, E/F/G wherein the outer abuse layer G is the outermost layer of the overall tube. The extrusion coated tape is then quenched, re-heated by passing it through a water bath at about 95 °C-98 °C, and oriented at this temperature (with orientation ratios of about 3.6 : 1 in the longitudinal direction and about 3.2 : 1 in the transverse direction) by the trapped-bubble process.

The sequence of layers (from the innermost heat-sealing layer A to the outermost abuse layer G in the overall structure is as follows:
A/B/C/D//E/F/G
wherein the resins used for the different layers and, between parentheses, the thickness of each layer are reported below:
A) homogeneous ethylene-octene-1 copolymer - d = 0.905 g/cm³ - MI = 6 g/10' (measured by ASTM D1238 - Condition E (190 °C, 2.16 kg)) - Affinity PL 1280 by Dow (9 µm)
B) a blend of 70 % by weight of ethylene-vinyl acetate copolymer [14 % VA, MI = 0.25 g/10' (measured by ASTM D1238 - Condition E (190 °C, 2.16 kg)) - Escorene Ultra F100014 by Exxon] and 30 % by weight of heterogeneous ethylene-octene-1 copolymer [d = 0.920 g/cm³ - m.p. = 124 °C (DSC - 2^{nd} heating) - MI = 1 g/10' (measured by ASTM D1238 - Condition E (190 °C, 2.16 kg)) - Dowlex 2045 E by Dow] (6 µm)
C) a blend of 20 % by weight of ethylene-vinyl acetate copolymer [14 % VA, MI = 0.25 g/10' (measured by ASTM D1238 - Condition E (190 °C, 2.16 kg)) - Escorene Ultra F100014 by Exxon] and 80 % by weight of heterogeneous ethylene-octene-1 copolymer [d = 0.920 g/cm³ - m.p. = 124 °C (DSC - 2^{nd} heating) - MI = 1 g/10' (measured by ASTM D1238 - Condition E (190 °C, 2.16 kg)) - Dowlex 2045 E by Dow] (7 µm)
D) a blend of 70 % by weight of ethylene-vinyl acetate copolymer [14 % VA, MI = 0.25 g/10' (measured by ASTM D1238 - Condition E (190 °C, 2.16 kg)) - Escorene Ultra F100014 by Exxon] and 30 % by weight of heterogeneous ethylene-octene-1 copolymer [d = 0.920 g/cm³ - m.p. = 124 °C (DSC - 2^{nd} heating) - MI = 1 g/10' (measured by ASTM D1238 - Condition E (190 °C, 2.16 kg)) - Dowlex 2045 E by Dow] (8 µm)
E) a blend of 30 % by weight of vinylidene chloride-methyl acrylate copolymer, 68 % by weight of vinylidene chloride-vinyl chloride and 2 % by weight of epoxidised soybean oil (6 µm)
F) anhydride grafted and rubber modified LLDPE - Tymor 1203 by Morton (4 µm)
G) a blend of 10 % by weight of EVOH [(44 mole % ethylene) - EVAL EP-105A by Marubeni], 10 % by weight of a terpolyamide comprising ε-caprolactam, 11-aminoundecanoic acid, and the equimolar salt of hexamethylenediamine and adipic acid as the basic units (Durethan® VP KU 2-2153 by Bayer), and the remaining 80 % of polyamide 6 (Capron B100 WP by Allied Signal) (6 µm).

### Example 11

A six layer film is prepared by coextrusion through a round die, irradiation of the thus obtained thick tubing (primary tape) at a dosage level of 42 kGy and orientation at 95-98°C (about 3X in the longitudinal direction, and about 2.5X in the transverse direction) by the trapped-bubble process. The sequence of layers, from the second outer heat-sealing layer to the first outer abuse layer is as follows:
A/B/C/D/E/F
wherein the resins used for the different layers and, between parentheses, the thickness of each layer are reported below:
A) homogeneous ethylene-octene-1 copolymer - d = 0.899 - 0.905 g/cm³ - MI = 3 g/10 min (Affinity® FW 1650 by Dow) (19 µm)
B) anhydride grafted and rubber modified LLDPE - Tymor™ 1203 by Morton (4 µm)
C) polyamide 6/12 copolymer based on 40 % by mole ε-caprolactam and 60 % by mole of laurolactam - m.p. = 127 °C (DSC - 2^{nd} heating) - Grilon™ CA 6E by EMS (7.5 µm)
D) EVOH (44 mol % ethylene) - EVAL™ EP-105A by Marubeni (4 µm)
E) anhydride grafted and rubber modified LLDPE - Tymor™ 1203 by Morton (4 µm)
F) a blend of 10 % by weight of EVOH [(44 mole % ethylene) - EVAL EP-105A by Marubeni], 10 % by weight of a terpolyamide comprising ε-caprolactam, 11-aminoundecanoic acid, and the equimolar salt of hexamethylenediamine and adipic acid as the basic units (Durethan® VP KU 2-2153 by Bayer), and the remaining 80 % of polyamide 6 (Capron B100 WP by Allied Signal) (7.5 µm).

The % free shrink, i.e. the irreversible and rapid reduction, as a percent, of the original dimensions of a sample subjected to a given temperature under conditions where nil restraint to inhibit shrinkage is present, has been measured according to ASTM D2732, by immersing for 4 seconds specimens of the structures to be tested (100 mm x 100 mm) into a bath of water at 85 °C. This attribute has been measured in the longitudinal direction (LD) as well as in the transversal direction (TD) and the results obtained with some representative structures of the present invention are reported on Table 1.

**TABLE 1**

| Structure of Example no. | | | | | |
|---|---|---|---|---|---|
| | | 1 | 2 | 3 | 4 |
| % Shrink | | | | | |
| | 85°C LD | 25 | 25 | 27 | 26 |
| | 85 °C TD | 36 | 37 | 38 | 37 |

The sealing properties of the films of Examples 1, 2, 3 and 4 have been tested by evaluating the seal strength and the integrity of packages obtained by an overlapped sealing. An internal procedure has been developed to evaluate the ability of a heat-shrinkable bag to maintain seal hermeticity and integrity (i.e. no delamination) when submitted to a non-standard sealing cycle. As used herein "non standard sealing cycle" is intended to refer to the case where, in the packaging cycle, the bags filled with the product to be packaged are placed inside a vacuum sealing chamber machine mispositioned (i.e. at least partially overlapped). As indicated above, in an industrial packaging cycle, this may happen, in particular when the positioning of the bags in the vacuum sealing chamber is not controlled by an operator, or this may be done on purpose in order to increase the output per sealing cycle.

This test on overlapped sealability has been carried out on a Cryovac® VSC 75 vacuum sealing machine set with a vacuum time of 20 s, a cooling time of 4 s, a sealing bar pressure of 1 bar and an adjustable impulse time. The test is a comparative test and the results obtained are compared to a standard that is represented by the same bag used however in a standard sealing cycle where the bag is correctly positioned inside the vacuum sealing chamber making sure that no overlap occurs, and the same sealing conditions are applied.

In particular for each formulation two empty end-seal bags (230 mm width) obtained by transverse seal and cut of the oriented tubing, are placed in the center of the sealing bar overlapped one on the other by half of their width in order to simulate a non standard sealing cycle. The shrink bags are vacuumized and sealed at the preselected conditions. At the end of the cycle, the two shrink bags are slowly separated one from the other, by tearing them apart along the seal seam. The seals are then visually checked for seal hermeticity and integrity (no delamination). The tests are then repeated at different impulse sealing times and the range of impulse times that allows to obtain reliable seals without rejects in case of non standard sealing cycle is determined. With the films of Examples 1, 2, 3 and 4, the package hermeticity and integrity characteristics were maintained despite the non standard packaging cycle at all the tested impulse times, from 1.2 to 2.4 s.

The films according to the present invention have also been submitted to an internal test to qualitatively evaluate the stack sealability thereof.

This test was run by stacking five empty end-seal bags (250 mm width) of the same thermoplastic material and heat-sealing them using either a Cryovac® VC 12 impulse sealing machine set with a sealing bar pressure of 4 bar and an impulse time of 3.7 s, or a Cryovac® VS 90 sealing machine, based on the Ultraseal sealing system, set with a sealing bar pressure of 3 bar and a sealing time of 3 s. In the former case the heat-sealing temperature was about 150 °C and in the latter case about 200 °C.

The bags were deemed to be stack-sealable if all of them were sealed (could not be opened manually) and all of them could be freely separated from one another without delamination.

The bags obtained from the films of Examples 1, 2, 3 and 4 resulted to be all stack-sealable in the above tests.

## Claims

1. A multi-layer oriented heat-shrinkable thermoplastic film comprising a first outer abuse layer comprising a polyamide blend comprising
a) a polyamide **characterized by** a Tm > 200 °C, and
b) an aliphatic copolyamide, **characterized by** a Tg < 100 °C, comprising
• ε-caprolactam,
• 11-aminoundecanoic acid and/or 12-aminododecanoic acid, and
• at least a third polyamide-forming aliphatic component,
as the basic units, and a second outer heat-sealing layer comprising a heat-sealable polyolefin.

2. The film of claim 1 wherein in the ployamide blende polyolefin of the second outer heat-sealing layer has a melting point < 140 °C, preferably < 130°C, and more preferably comprised between about 80°C and about 128 °C.

3. The multi-layer thermoplastic film of claim 1 which further comprises an intermediate gas-barrier layer.

4. The film of claim 1 wherein in the polyamide blend the polyamide a) is present in an amount of 30 to 95 wt. %, based on the weight of the polyamide blend, preferably in an amount of 40 to 92 wt. %, more preferably in an amount of 50 to 90 wt. %, and even more preferably in an amount of 60 to 87 wt.%.

5. The film of claim 1 wherein in the polyamide blend the polyamide a) has a melting point higher than 210 °C, preferably higher than 215 °C and even more preferably higher than 220 °C.

6. The film of claim 1 wherein in the polyamide blend the polyamide a) is selected from the group consisting of polyamide 6, modified polyamide 6, polyamide 66, polyamide 46, polyamide 6/66, and polyamide 6/12 copolymers.

7. The film of claim 1 wherein in the polyamide blend the co-polyamide b) comprises up to about 99 wt. % of ε-caprolactam, from about 0.5 wt. % to about 40 wt. % of 11-aminoundecanoic acid and/or 12-aminododecanoic acid, and from about 0.5 wt. % to about 40 wt. % of said at least third polyamide-forming aliphatic component.

8. The film of claim 7 wherein in the polyamide blend said third polyamide-forming aliphatic component is a lactam, preferably laurolactam, or the equimolar salt of a diamine with a diacid, preferably the equimolar salt of hexamethylenediamine with adipic acid or the equimolar salt of hexamethylenediamine with 1,12-dodecandioic acid.

9. The film of claim 8 wherein in the polyamide blend the co-polyamide b) comprises from 75 to 85 wt. % of ε-caprolactam, from 4 to 20 wt. % of 11-aminoundecanoic acid and/or 12-aminododecanoic acid and from 4 to 20 wt. % of the equimolar salt of hexamethylenediamine with adipic acid.

10. The film of claim 1 wherein in the polyamide blend the co-polyamide b) has a Tg < 90 °C, preferably < 80 °C.

11. The film of any of the preceeding claims wherein the first outer abuse layer further comprises up to 35 wt.%, preferably up to 30 wt.%, and even more preferably up to 25 wt.%, based on the overall weight of the polyamide blend, of ethylene-vinyl alcohol copolymer.

12. A flexible container of a multi-layer film of claim 1, said container having at least a sealed area formed by the second outer heat-sealing layer of the film.

13. The flexible container of claim 11 wherein the multi-layer film also comprises an intermediate gas-barrier layer.

14. A product packaged with a multi-layer film of claim 1 wherein the second outer heat-sealing layer is the layer in contact with the product packaged.

## Patentansprüche

1. Mehrschichtige orientierte wärmeschrumpfbare thermoplastische Folie, die eine erste äußere Schutzschicht, die ein Polyamidgemisch umfasst, das
a) Polyamid, das durch eine Tₘ > 200°C **gekennzeichnet** ist, und
b) aliphatisches Copolyamid, das durch eine Tg < 100°C **gekennzeichnet** ist und
• ε-Caprolactam,
• 11-Aminoundecansäure und/oder 12-Aminododecansäure und
• mindestens eine dritte polyamidbildende aliphatische Komponente,
als Basiseinheiten umfasst,
und eine zweite äußere Heißsiegelschicht umfasst, die heißsiegelbares Polyolefin umfasst.

2. Mehrschichtige thermoplastische Folie nach Anspruch 1, bei der das heißsiegelbare Polyolefin der zweiten äußeren Heißsiegelschicht einen Schmelzpunkt < 140°C, vorzugsweise < 130°C und insbesondere zwischen etwa 80°C und etwa 128°C hat.

3. Mehrschichtige thermoplastische Folie nach Anspruch 1, die ferner eine Gasbarrierezwischenschicht umfasst.

4. Folie nach Anspruch 1, bei der in dem Polyamidgemisch das Polyamid a) in einer Menge von 30 bis 95 Gew.-%, bezogen auf das Gewicht des Polyamidgemisches, vorzugsweise in einer Menge von 40 bis 92 Gew.-%, insbesondere in einer Menge von 50 bis 90 Gew.-% und bevorzugter in einer Menge von 60 bis 87 Gew.-% vorhanden ist.

5. Folie nach Anspruch 1, bei der in dem Polyamidgemisch das Polyamid a) einen Schmelzpunkt höher als 210°C, vorzugsweise höher als 215°C und bevorzugter höher als 220°C hat.

6. Folie nach Anspruch 1, bei der in dem Polyamidgemisch das Polyamid a) ausgewählt ist aus der Gruppe bestehend aus Polyamid 6, modifiziertem Polyamid 6, Polyamid 66, Polyamid 46, Polyamid 6/66- und Polyamid 6/12-Copolymeren.

7. Folie nach Anspruch 1, bei der in dem Polyamidgemisch das Copolyamid b) bis zu etwa 99 Gew.-% ε-Caprolactam, etwa 0,5 Gew.-% bis etwa 40 Gew.-% 11-Aminoundecansäure und/oder 12-Aminododecansäure und etwa 0,5 Gew.-% bis etwa 40 Gew.-% der mindestens dritten polyamidbildenden aliphatischen Komponente umfasst.

8. Folie nach Anspruch 7, bei der in dem Polyamidgemisch die dritte polyamidbildende aliphatische Komponente ein Lactam, vorzugsweise Laurolactam, oder das äquimolare Salz eines Diamins mit einer Disäure ist, vorzugsweise das äquimolare Salz von Hexamethylendiamin mit Adipinsäure oder das äquimolare Salz von Hexamethylendiamin mit 1,12-Dodecandisäure.

9. Folie nach Anspruch 8, bei der in dem Polyamidgemisch das Copolyamid b) 75 bis 85 Gew.-% ε-Caprolactam, 4 bis 20 Gew.-% 11-Aminoundecansäure und/oder 12-Aminododecansäure und 4 bis 20 Gew.-% des äquimolaren Salzes von Hexamethylendiamin mit Adipinsäure umfasst.

10. Folie nach Anspruch 1, bei der in dem Polyamidgemisch das Copolyamid b) eine Tg < 90°C, vorzugsweise < 80°C hat.

11. Folie nach einem der vorhergehenden Ansprüche, bei der die erste äußere Schutzschicht ferner bis zu 35 Gew.-%, vorzugsweise bis zu 30 Gew.-% und insbesondere bis zu 25 Gew.-%, bezogen auf das Gesamtgewicht des Polyamidgemisches, Ethylen-Vinylalkohol-Copolymer umfasst.

12. Flexibler Behälter aus Mehrschichtfolie gemäß Anspruch 1, der mindestens einen gesiegelten Bereich aufweist, der durch die zweite äußere Heißsiegelschicht der Folie gebildet ist.

13. Flexibler Behälter nach Anspruch 11, bei dem die Mehrschichtfolie auch eine Gasbarrierezwischenschicht umfasst.

14. Produkt, das mit Mehrschichtfolie gemäß Anspruch 1 verpackt ist, wobei die zweite äußere Heißsiegelschicht die Schicht in Kontakt mit dem verpackten Produkt ist.

## Revendications

1. Film thermoplastique, multicouche, orienté, thermorétractable, comprenant une première couche externe, constituée d'un mélange de polyamides, comprenant:
a) un polyamide **caractérisé par** une Tm > 200°C, et
b) un copolyamide aliphatique, **caractérisé par** une Tv < 100°C, comprenant:
- l'ε-caprolactame,
- l'acide 11-aminoundécanoïque et/ou l'acide 12-aminododécanoïque, et
- au moins un troisième composant aliphatique formant polyamide, comme unités de base,
et une deuxième couche externe, scellable à chaud, comprenant une polyoléfine scellable à chaud.

2. Film thermoplastique multicouche selon la revendication 1, dans lequel la polyoléfine scellable à chaud de la deuxième couche externe, scellable à chaud,, a un point de fusion < 140°C, de préférence < 130°C, et de manière plus préférée, compris entre environ 80°C et environ 128°C.

3. Film thermoplastique multicouche selon la revendication 1, qui comprend en outre, une couche de barrière aux gaz, intermédiaire.

4. Film selon la revendication 1, où dans le mélange de polyamides, le polyamide a) est présent en une quantité allant de 30 à 95% en poids, sur base du poids du mélange de polyamides, de préférence en une quantité allant de 40 à 92% en poids, de manière plus préférée en une quantité allant de 50 à 90% en poids et de manière encore plus préférée, en une quantité allant de 60 à 87% en poids.

5. Film selon la revendication 1, où dans le mélange de polyamides, le polyamide a) a un point de fusion supérieur à 210°C, de préférence supérieur à 215°C et de manière encore plus préférée, supérieur à 220°C.

6. Film selon la revendication 1, où dans le mélange de polyamides, le polyamide a) est choisi parmi le groupe consistant en le polyamide 6, le polyamide 6 modifié, le polyamide 66, le polyamide 46, les copolymères polyamide 6/66 et polyamide 6/12.

7. Film selon la revendication 1, où dans le mélange de polyamides, le copolyamide b) comprend jusqu'à 99% en poids d'ε-caprolactame, d'environ 0,5% en poids à environ 40% en poids d'acide 11-aminoundécanoïque et/ou d'acide 12-aminododécanoïque, et d'environ 0,5% en poids à environ 40% en poids dudit troisième composant aliphatique formant polyamide.

8. Film selon la revendication 7, où dans le mélange de polyamides, ledit troisième composant aliphatique formant polyamide est un lactame, de préférence le laurolactame, ou le sel équimolaire d'une diamine avec un diacide, de préférence le sel équimolaire de l'hexaméthylènediamine avec l'acide adipique ou le sel équimolaire de l'hexaméthylènediamine avec l'acide 1,12-dodécane-dioïque.

9. Film selon la revendication 8, où dans le mélange de polyamides, le copolyamide b) comprend de 75 à 85% en poids d'ε-caprolactame, de 4 à 20% en poids d'acide 11-aminoundécanoïque et/ou d'acide 12-aminododécanoïque, et de 4 à 20% en poids du sel équimolaire de l'hexaméthylènediamine avec l'acide adipique.

10. Film selon la revendication 1, où dans le mélange de polyamides, le copolyamide b) a une Tv < 90°C, de préférence < 80°C.

11. Film selon l'une quelconque des revendications précédentes, où la première couche externe comprend en outre, jusqu'à 35% en poids, de préférence jusqu'à 30% en poids et de manière encore plus préférée, jusqu'à 25% en poids, sur base du poids global du mélange de polyamides, de copolymère éthylène-alcool vinylique.

12. Récipient flexible d'un film multicouche selon la revendication 1, ledit récipient ayant au moins une zone scellée, formée par la deuxième couche externe scellable à chaud du film.

13. Récipient flexible selon la revendication 11, dans lequel le film multicouche comprend également une couche de barrière aux gaz, intermédiaire.

14. Produit emballé avec un film multicouche selon la revendication 1, où la deuxième couche externe scellable à chaud est en contact avec le produit emballé.
